(19) **Europäisches Patentamt** / **European Patent Office** / **Office européen des brevets**

(11) **EP 4 689 830 B1**

(12) **EUROPEAN PATENT SPECIFICATION**

(45) Date of publication and mention of the grant of the patent:
**03.06.2026 Bulletin 2026/23**

(21) Application number: **24719242.0**

(22) Date of filing: **26.03.2024**

(51) International Patent Classification (IPC):
**G06F 1/10** *(2006.01)* **H04L 7/00** *(2006.01)*

(52) Cooperative Patent Classification (CPC):
**G06F 1/105; H04L 7/0075**

(86) International application number:
**PCT/GB2024/050816**

(87) International publication number:
**WO 2024/209184 (10.10.2024 Gazette 2024/41)**

(54) **A CLOCK SIGNAL DISTRIBUTION CIRCUIT**

SCHALTUNG ZUR VERTEILUNG EINES TAKTSIGNALS

CIRCUIT DE DISTRIBUTION DE SIGNAL D'HORLOGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.04.2023 GB 202305194**

(43) Date of publication of application:
**11.02.2026 Bulletin 2026/07**

(73) Proprietor: **Salience Labs Ltd**
**Thame, Oxfordshire OX9 3EZ (GB)**

(72) Inventors:
- **D' ALESSANDRO, Crescenzo**
 **The Lee Great Missenden HP16 9LX (GB)**
- **FELDMANN, Johannes**
 **Oxford Oxfordshire OX2 6HT (GB)**

(74) Representative: **Scintilla Intellectual Property Ltd**
**Suite 2.1**
**145 St. Vincent Street**
**Glasgow G2 5JF (GB)**

(56) References cited:
**US-A- 5 065 454 US-A- 5 537 498**

# Description

## Technical Field

The present disclosure relates to a clock signal distribution circuit. In particular the disclosure relates to an optical circuit and corresponding method for distributing a plurality of clock signals.

## Background

Electronic or digital circuits are synchronized or operated using a periodic signal known as a clock signal. The clock signal is distributed from a single source to various elements of the circuit. Traditional CMOS clock distribution systems require a chain of buffers. An electrical signal degrades over the length of a wire; consequently if this length is sufficiently large the voltage levels observed at the receiving end will be smaller than the threshold required to trigger a logic switch from one state to another. Buffers are used along the length of the wire to ensure that the signal is regenerated appropriately so that the receiving end observes a suitable voltage change to indicate a logic switch.

Traditional clock distribution systems are limited by significant variations resulting in a so-called skew between the distributed clock signals. Clock skew or timing skew occurs when a same sourced clock signal arrives at different components at different times. The difference between the readings of the same clock at multiple components is the skew. Various parameters can be involved in this phenomenon including length variations of wire-interconnects, temperature variations, capacitive coupling, among others.

The logic circuitry used in standard application-specific integrated circuits (ASICs) often limits the clock speed achievable. A high skew with high variability prevents the logic circuitry from running at high speeds, as the timing of the signals needs to be limited to cope with the unwanted skew.

Overall distributing clocks in an electronics domain is a complex operation. It is generally carried out by advanced Electronic design automation (EDA) tools and involves significant computation effort to minimize skew between end-points and limit jitter. US5537498A describes a clock system for computer systems, which uses a pair of oscillator-laser transmitters. It is an object of the disclosure to address one or more of the above mentioned limitations.

## Summary

The invention is set out in the appended set of claims. The reference numbers provided in the claims are provided for clarity only and do not limit the scope of the claims. According to a first aspect of the disclosure, there is provided an optical circuit for distributing one or more clock signals, the optical circuit comprising an optical arrangement adapted to receive a primary modulated optical signal and split the primary modulated optical signal into a plurality of secondary modulated optical signals; and a plurality of transducers adapted to convert each secondary modulated optical signal into a corresponding secondary clock signal; a first input port for receiving a first drive signal derived from a primary clock signal; and a modulator adapted to receive a first optical signal from a first light source, wherein the modulator is adapted to modulate the first optical signal using the first drive signal to obtain the primary modulated optical signal.

For instance the plurality of transducers may comprise a plurality of photodetectors.

For instance, the primary modulated signal may have a same profile and a same frequency as the primary clock signal.

The first drive signal derived from the primary clock signal may be the primary clock signal itself or a converted primary clock signal having the required amplitude level for driving the modulator.

The modulator may be a ring resonator, an electro-optic modulator (EOM), a phase change modulator (PCM), an electro absorption modulator (EAM), an acousto-optical modulator, a polymer based modulator, a thermal modulator, a mechanical modulator, a Mach Zehnder modulator, or a semiconductor optical amplifier (SOA).

Optionally, the optical arrangement comprises a primary splitter having an input for receiving the primary modulated optical signal and a plurality of outputs, each output being coupled to a corresponding primary channel for transmitting a corresponding secondary modulated optical signal.

Optionally, the optical arrangement comprises a plurality of splitting stages comprising at least a first stage and a second stage.

Optionally, the first stage is configured to split the primary modulated optical signal into a first generation of secondary modulated signals, and wherein the second stage is configured to split the first generation of secondary modulated signals into a second generation of secondary modulated signals.

Optionally, the first stage comprises the primary splitter and wherein the second stage comprises a set of secondary splitters, each secondary splitter having an input coupled a primary channel of the primary splitter and a plurality of outputs each output being coupled to a secondary channel for transmitting a corresponding secondary modulated signal from the second generation.

Optionally, wherein a total length between the primary splitter and individual output ports is designed to be the same for the different paths.

Optionally, the optical circuit comprises a first light source configured to generate the first optical signal. For instance the first light source may be a laser. Alternatively the first light source may be a broadband source such as an amplified spontaneous emission (ASE) source or a superluminescent light-emitting diode (SLED).

Optionally, the optical circuit comprises a first optical source adapted to generate a first optical signal having a first wavelength; a second optical source adapted to generate a second optical signal having a second wavelength; and a combiner adapted to receive the first optical signal and the second optical signal to generate the primary modulated optical signal. For instance the primary modulated optical signal may have a beat frequency that is function of the first wavelength and the second wavelength.

Optionally, the optical circuit comprises a second input port for receiving a second drive signal and a second modulator adapted to modulate a second optical signal using the second drive signal to obtain another primary modulated optical signal, wherein the second drive signal is derived from another primary clock signal; wherein the first optical signal has a first wavelength and the second optical signal has a second wavelength.

Optionally, the optical arrangement comprises a wavelength multiplexer or combiner to combine the primary modulated optical signals.

Optionally, the optical arrangement comprises at least one wavelength demultiplexer to separate the primary modulated optical signals.

Optionally, the optical circuit is an integrated optical circuit.

According to a second aspect of the disclosure there is provided a system comprising an optical circuit according to the first aspect coupled to a clock source.

Optionally, the primary clock signal encodes a first periodic signal at a first frequency and a second periodic signal at a second frequency. For instance the primary clock signal has three or more levels. For example the primary clock signal may be a three-level clock signal or a four-level clock signal or a N-level clock signal in which N is equal or greater than 3.

Optionally, the system comprises a frequency divider coupled to an adder, the frequency divider being adapted to receive a first clock signal from the clock source at the first frequency and to generate a second clock signal at the second frequency; wherein the adder is adapted to add the first clock signal with the second clock signal to generate the primary clock signal. For instance the frequency divider may be a clock deleter. The system may comprise multiple frequency dividers and multiple adders. For a N-level clock signal the system may include N-2 frequency dividers and N-2 adders.

Optionally, the first clock signal and the second clock signal are aligned in phase.

Optionally, the clock source is a first clock source for generating a first primary clock signal, and the system comprises a second clock source for generating a second primary clock signal.

Optionally, the system further comprising at least one electronic circuit having a plurality of ports for receiving the plurality of secondary clock signals. For example, the said at least one electronic circuit may be an integrated circuit such as an application-specific integrated circuit (ASIC). A plurality of electronic circuits may be provided within a single package or distributed between different packages.

Optionally, the said at last one electronic circuit comprises a plurality of recovery circuits, each recovery circuit being coupled to a corresponding transducer of the optical circuit.

According to a third aspect of the disclosure, there is provided a method of distributing one or more clock signals, the method comprising

> receiving a first drive signal at a first input port, wherein the first drive signal is derived from a primary clock signal;
> receiving by a modulator a first optical signal from a first light source;
> modulating, with the modulator, the first optical signal using the first drive signal to obtain a primary modulated optical signal;
> splitting the primary modulated optical signal into a plurality of secondary modulated optical signals; and converting, with a plurality of transducers, each secondary modulated optical signal into a corresponding secondary clock signal.

The options described with respect to the first aspect of the disclosure are also common to the second and third aspects of the disclosure.

**Description of the drawings**

The disclosure is described in further detail below by way of example and with reference to the accompanying drawings, in which:

> figure 1 is a flow chart of a method for distributing a plurality of clock signals according to the disclosure;
> figure 2A is a diagram of a system comprising an optical circuit for implementing the method of figure 1;
> figure 2B is a diagram of the optical circuit of figure 2A showing the various signals.
> figure 3A is diagram of a circuit for distributing a plurality of clock signals encoding two frequencies;
> figure 3B is a plot showing a fast clock signal, a slow clock signal, and a 3-level clock signal obtained from the combination of the first two signals;
> figure 4A is diagram of another circuit for distributing a plurality of clock signals encoding three frequencies;
> figure 4B is a plot showing a fast clock signal, a medium clock signal, a slow clock signal, and a 4-level clock signal obtained from the combination of the first three signals;
> figure 5 is a diagram of another circuit for distributing a plurality of clock signals;

figure 6 is a diagram of a circuit for distributing multiple un-related clock signals.

**Description**

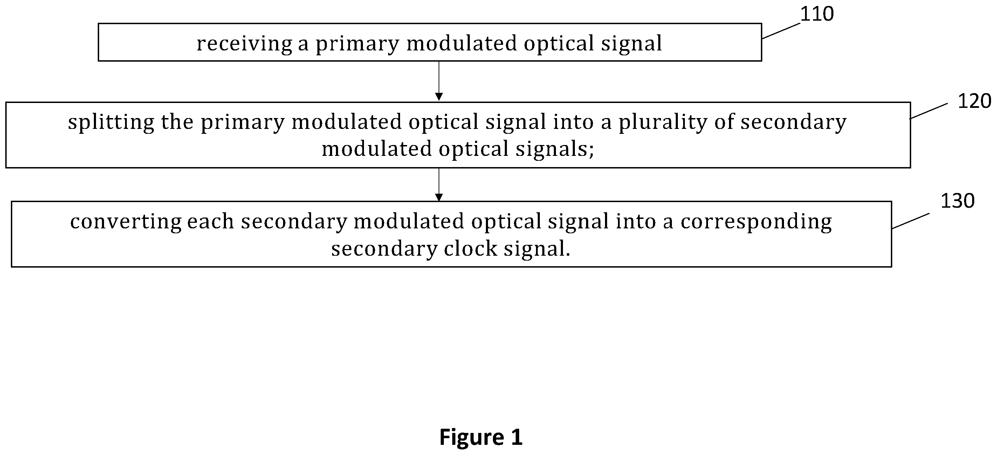

Figure 1 is a flow chart of a method for distributing a plurality of clock signals. At step 110 a primary modulated optical signal is received. At step 120 the primary modulated optical signal is split into a plurality of secondary modulated optical signals. At step 130 each secondary modulated optical signal is converted into a corresponding secondary clock signal.

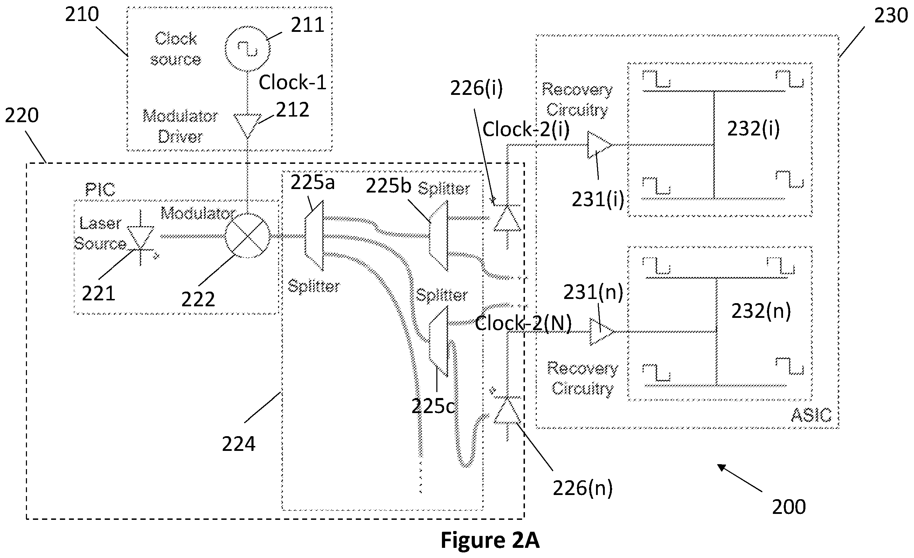

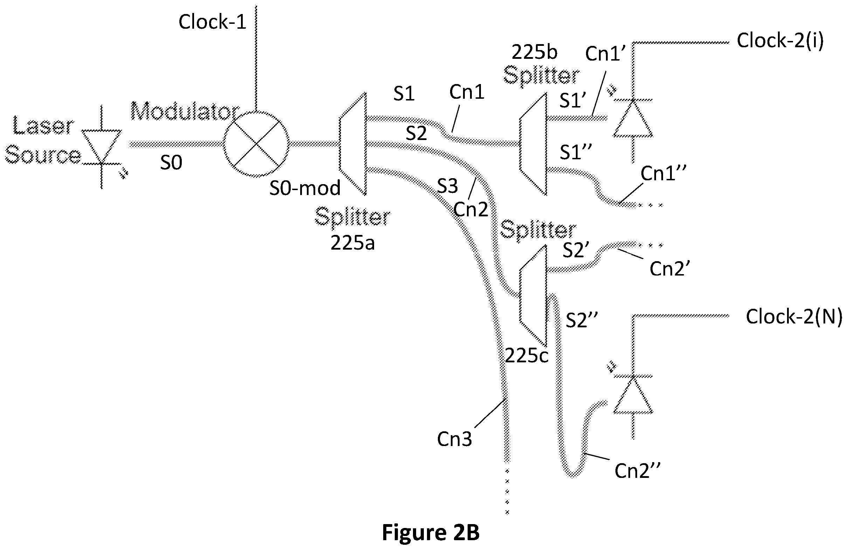

Figure 2A is a diagram of a system comprising an optical circuit for implementing the method of figure 1. Figure 2B is a diagram of the optical circuit of figure 2A showing the various signals. The system 200 includes a primary clock circuit 210, an optical circuit also referred to as distribution circuit 220, and an electronic circuit 230.

The primary clock circuit 210 has a clock source 211 to generate a primary clock signal Clock-1 at the appropriate frequency for the application. The clock source 211 is coupled to a driver 212 for converting the primary clock signal to the required drive signal for driving the modulator 222. The clock source 211 could be implemented in various ways, for instance, it may be provided by an oscillator or a phase lock loop (PLL) circuit or other clock generator circuits in the electronics or photonics domain. So, the primary clock signal Clock-1 may be an electrical clock signal or an optical clock signal. In some implementations the driver 212 may be omitted. In this case the drive signal would be provided directly by the primary clock signal Clock-1.

The optical circuit 220 has an input port for receiving a drive signal derived from the primary clock signal (Clock-1), a light source 221, a modulator 222, an optical arrangement 224, and a plurality of transducers 226(i)-226(n).

The light source 221 may be a laser. Alternatively the light source 221 may be a broadband source such as an amplified spontaneous emission (ASE) source or a superluminescent light-emitting diode (SLED). The broadband signal may be modulated directly, or a filter may be used after the broadband source to select a specific wavelength range to be modulated, hence reducing dispersion effects. A wavelength demultiplexer could also be used after the broadband source to select a specific wavelength.

The modulator 222 is adapted to modulate an optical signal S0 from the light source 221 using the drive signal to obtain a primary modulated signal SO-mod. The modulator 222 may be implemented in different ways. For instance the modulator 222 may be a ring resonator, an electro-optic modulator (EOM), a phase change modulator (PCM), an electro absorption modulator (EAM), an acousto-optical modulator, a polymer based modulator, a thermal modulator, a mechanical modulator, a Mach Zehnder modulator, or a semiconductor optical amplifier (SOA), among others.

The optical arrangement 224 shown in more details in figure 2B is adapted to split the primary modulated signal SO-mod into a plurality of secondary modulated signals S1, S2, S3, S1', S1", S2', S2"...

The optical arrangement 224 has a first splitting stage and a second splitting stage, simply referred to as first and second stages. The first stage is configured to split the primary modulated optical signal SO-mod into a first generation of secondary modulated signals S1, S2 and S3. Similarly, the second stage is configured to split the first generation of secondary modulated signals into a second generation of secondary modulated signals S1', S1", S2', S2", S3', S3".

The first stage includes a primary splitter 225a. The primary splitter 225a has an input for receiving the primary modulated signal SO-mod and a plurality of outputs; in this example three outputs are provided. Each output is coupled to a corresponding primary channel Cn1, Cn2, Cn3 for transmitting a corresponding secondary modulated signal S1, S2, S3.

The second stage includes a secondary splitter for each of the outputs of the primary splitter 225a. Figure 2B only shows the secondary splitters 225b and 225c for Cn1 and Cn2, however another secondary splitter is also provided for Cn3 and any additional channel that may be provided. The splitter 225b has an input coupled the primary channel Cn1 of the primary splitter 225a and two outputs coupled to secondary channels Cn1' and Cn1" for transmitting the secondary modulated signals S1' and S1", respectively.

Similarly, the splitter 225c has an input coupled the primary channel Cn2 of the primary splitter 225a and two outputs coupled to secondary channels Cn2' and Cn2" for transmitting the secondary modulated signals S2' and S2", respectively.

The splitters may be implemented in different ways. For instance a directional coupler could be used such as a directional fibre coupler or an integrated photonic directional coupler. Alternatively an optical beam splitters or cascaded Y-Splitters or multi-mode interference (MMI) couplers could also be used.

The lengths of the channels are defined so that secondary clock signals Clock-2(i)- Clock-2(N) have no skew. The primary and secondary channels may have a predefined length to introduce a predefined delay with respect to a reference path. The reference path may be chosen as the longest path. To ensure the correct skew matching the other paths should be designed to match that the length of the reference path.

The overall length between the primary splitter 225a and each individual port on 230 is designed to be the same for the different paths. In figure 2B the channels are designed such that the length of the channels Cn1+Cn1' = Cn1+Cn1" = Cn2+Cn2' = Cn2+Cn2" = Cn3+Cn3' = etc.... It will be appreciated that the drawing of figure 2 does not convey these specific lengths.

Although the optical arrangement 224 is presented with two stages, it will be appreciated that it may be implemented with only one stage or more than two stages. So in general the optical arrangement 224 could have a number N of stages in which N is equal or greater than one.

The electronic circuit 230 may have circuit portions which communicate with each other and other circuits portions which do not communicate with each other. The circuits portions which communicate with each other may require a same clock signal, while the circuit portions which do not communicate with each other can operate with different clock signals.

The optical arrangement 224 may be designed with multiple sets of channels having a different overall length for different regions of the electronic circuit 230. For instance, a first set may include Cn1 and Cn2 such that Cn1+Cn1' = Cn1+Cn1" = Cn2+Cn2' = Cn2+Cn2"; and a second set may include Cn3 and Cn4 such that Cn3+Cn3' = Cn3+Cn3" = Cn4+Cn4' = Cn4+Cn4".

In figure 2 the transducers 226(i)-226(n) are implemented as photodetectors adapted to convert each secondary modulated signal in the optical domain into a corresponding secondary clock signal Clock-2(i) - Clock-2(N) into the electronic domain. The secondary clock signals may be duplicates and therefore have the same properties (same waveform profile and same frequency) as the primary clock signal.

The electronic circuit 230 has a plurality of ports for receiving the plurality of clock signals from the distribution circuit 220. For instance the electronic circuit 230 may be an application-specific integrated circuit (ASIC). The electronic circuit 230 includes a plurality of recovery circuits 231(i)-231(n) coupled to standard clock distribution networks 232(i)-232(n). Each recovery circuit is coupled to a corresponding transducer of the optical circuit 220. The clock recovery circuits are designed to translate the electrical levels of the signal recovered by the transducers/photodetectors into standard CMOS levels or appropriate levels for signalling in the electronic domain. The standard clock distribution networks 232(i)-232(n) are used for the last section of the clocking infrastructure to provide CMOS-compatible (or suitable levels) to the logic and/or analog circuitry. The recovery circuits may be adapted to perform some fine tuning functionality to ensure that any variability on the photodetectors is cancelled out. Alternatively or in combination, electronic programmable delay lines may be provided after the recovery circuitry to adjust for photodetector variabilities; these lines would be calibrated during first bring-up.

The system 200 may be implemented in different ways. For instance the optical circuit 220 may be implemented as a Photonics Integrated Circuit (PIC). In this case the channels may be integrated waveguides. Depending on the application the light source 221 may be provided either on-chip or off-chip. The optical circuit 220 and the electronic circuit 230 may be implemented on a same chip or two separate chips. Alternatively the optical circuit 220 could also be implemented using non-integrated elements. In this case the channels may be optical fibres.

It will be appreciated that the optical circuit 220 may be used to synchronise multiple individual electronic circuits 230, for instance multiple ASIC chips. The individual chips may be provided within a single package or distributed between different packages.

In operation the clock source 211 generates the primary clock signal Clock-1 at a chosen frequency. The driver 212 converts the primary clock signal to a drive signal for driving the modulator 222. Depending on the nature of the primary clock signal this may require providing a drive signal having the appropriate voltage level for the modulator 222. The modulator 222 modulates the optical signal received from the light source 211 based on the primary clock signal. The optical arrangement 224 then splits the primary modulated signal SO-mod into a plurality of secondary modulated signals S1, S2, S3, S1', S1", S2', S2"... The photodetectors 226(i)-226(n) convert each secondary modulated signal in the optical domain into a corresponding secondary clock signal Clock-2(i) - Clock-2(N) into the electronic domain. Each recovery circuit 231 recovers a corresponding clock signal and translates it into levels appropriate for the analog/digital logic. The distribution networks 232(i) - 232(n) distribute the clock signals to various units in the electronics domain.

The electronic circuit 230 benefits from the low-skew, low-variability clock signals. As the optical signals can travel relatively long distances in the channels without significant reduction in signal strength, there is no need for intermediate buffers. This permits to reduce variability between clock signals. The skew is defined by the relative lengths of the channels/waveguides used for clock distribution in the optical circuit 220. The lengths of the different channels may be designed to apply a skew adjustment.

The circuit of figure 2 may be modified to implement two different clock signals. In many applications multiple clocks are required to be aligned in phase even though their frequencies are at an integer ratio from each other, e.g. a 1GHz clock with a 100MHz clock (so one clock is 10 times slower than the other). For instance a mixed-signal system may use a fast clock for data conversion and a slower clock for digital data distribution. The two clocks can be easily generated, but maintaining phase between them is difficult due to variability. As the two clocks are distributed over separate clock trees, their phase relationship can be lost.

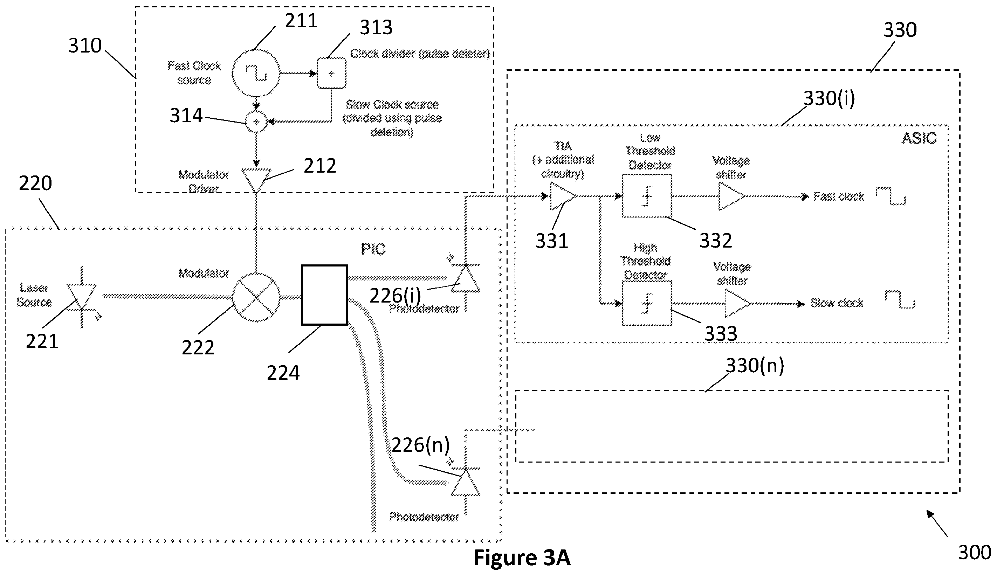

Figure 3A shows a circuit for distributing a plurality of clock signals encoding multiple frequencies, in this example two frequencies. The circuit 300 is similar to the circuit 200 of figure 2, and includes a primary clock circuit 310, a distribution circuit 220, and an electronic circuit 330. The same reference numerals have been used to represent corresponding components and their description will not be repeated for the sake of brevity. For clarity, the components of the optical arrangement 224 of the distribution circuit 220 are not shown.

The primary clock circuit 310 is provided with a clock divider 313 and an adder 314. The adder 314 may be provided with a phase alignment circuit (not shown) for aligning the phase of the clock signals received by the adder. The phase alignment circuit may be implemented with one or more delay lines. The clock divider 313 is adapted to reduce the frequency of an incoming clock signal by removing clock pulses. For instance if the incoming clock signal has a frequency of 100Hz, and if the clock divider is set to divide the frequency by 2, then the clock divider will remove every second pulse to provide a clock signal at 50Hz. The clock source 211 is coupled to the driver 212 via the adder 314. The clock divider 313 has an input coupled to the clock source 211, and an output coupled to the adder 314.

The electronic circuit 330 includes a plurality N of sub circuits 330(i)-330(n), associated with the photodetectors 226(i)-226(n). Each sub circuit 330(i) has a signal conditioning circuit 331 coupled to a low threshold detector 332, and a high threshold detector 333. The threshold detectors may be implemented as voltage comparators, for instance a first comparator tuned to a low level for the source clock and a second comparator tuned to a higher threshold for a 3-level clock. Voltage shifters are provided to bring the clock signal to an appropriate level for further use or processing.

In operation, the clock source 211 generates a first clock signal, also referred to as fast clock signal, having a first frequency. The clock divider 313 receives the first clock signal from the clock source 211 and provides a frequency divided clock signal also referred to as slow clock signal, having a second frequency lower than the first frequency. The phases of the fast clock signal and of the derived (slow) clock signal are aligned via the phase alignment circuit. **In** turn the adder 314 adds the first clock signal (fast clock) with the frequency divided clock signal (slow clock), to generate a summed clock signal. For instance the adder 314 may add the voltages of the first clock signal and the frequency divided clock signal. The summed clock signal is then provided to the driver 212 for driving the modulator 222. So the summed clock signal becomes the primary clock signal. The summed clock signal has multiple amplitude levels. For instance the summed clock signal may be a 3-level clock signal that encodes both the fast and the slow clock frequencies.

The clock divider 313 is configured to generate a divided clock by removing or deleting clock pulses, thus changing the clock duty cycle, rather than obtaining a clock with the same duty cycle as the input clock. Such clock dividers are often referred to as "clock deleters" for this reason.

The distribution circuit 220 is then used to perform clock distribution at 3 levels. The clocks are distributed over the same clock network allowing to achieve a high signal to noise ratio (SNR). The electronic circuit 330 recovers and conditions the clock signals to be used in other digital or analog circuitry (not shown). As the voltage level exceeds a predefined voltage ( for instance 1V) only when the derived 3-level clock is generated, the two clocks can be successfully recovered. This is achieved with a reduced skew by sharing a common clock distribution network.

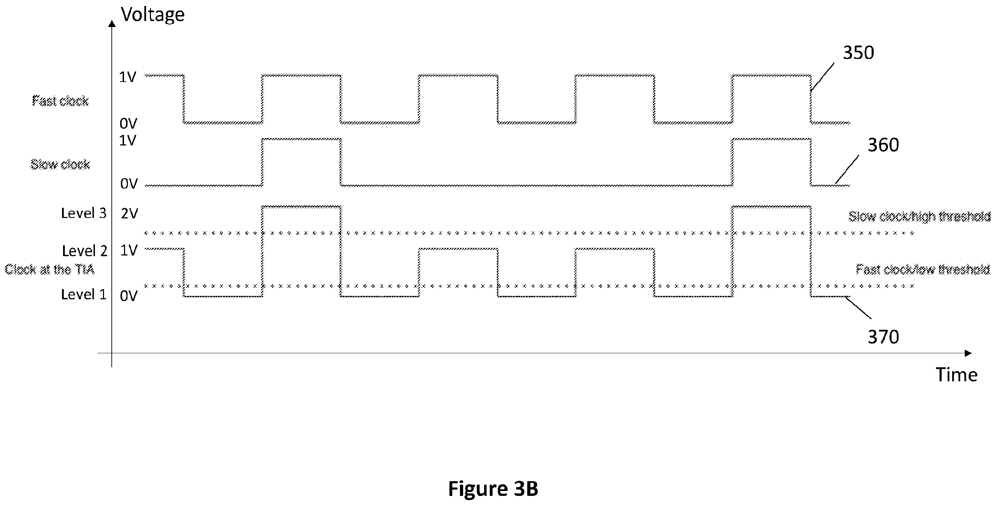

Figure 3B is a plot showing the first clock signal also referred to as fast clock signal 350, the frequency divided clock signal also referred to as slow clock signal 360, and the 3-level clock signal 370. The fast clock signal 350 displays clock pulses at a first frequency. The slow clock signal 360 displays clock pulses at a second frequency, lower than the first frequency by a pre-determined or pre-selected frequency ratio. The fast clock signal 350 and the slow clock signal 360 are aligned in phase. Consequently, the sum of the fast clock signal with the slow clock signal results in the 3-level clock signal 370. So the 3-level clock signal 370 encodes a first periodic signal at the first frequency and a second periodic signal at the second frequency. In this example the first level is 0V, the second level is 1V and the third level is 2V. The circuit of figure 3A may be used to provide a fast and a slow clock on a same channel. The circuit of figure 3A may be modified to generate a primary clock signal having more than 3 levels. This may be achieved by providing additional clock dividers set with different dividing values, and by adapting the circuit 330 to include additional threshold detectors.

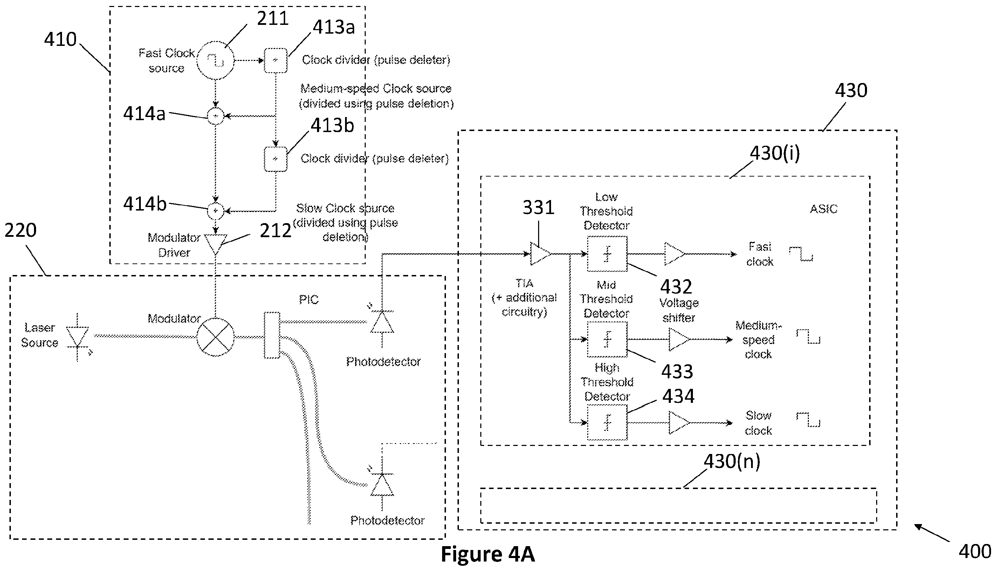

Figure 4A shows a circuit for distributing a plurality of clock signals encoding three frequencies. The circuit 400 is similar to the circuit 300 of figure 3A, and includes a primary clock circuit 410, a distribution circuit 220, and an electronic circuit 430. The same reference numerals have been used to represent corresponding components and their description will not be repeated for the sake of brevity.

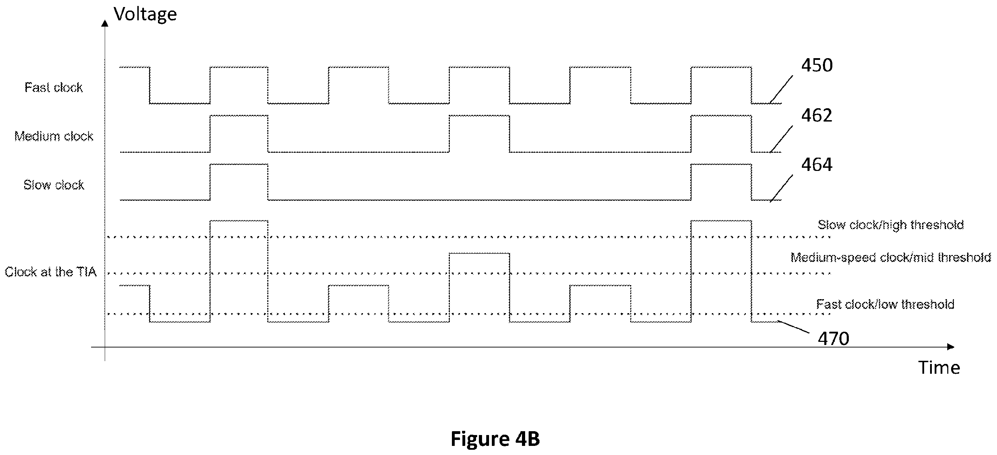

The primary clock circuit 410 is provided with two clock dividers 413a, 413b and two adders 414a, 414b. The first clock divider 413a has an input coupled to the clock source 211 and an output coupled to the adder 414a and to the second clock divider 413b. The second adder 414b receives the output of both the first adder 414a and the second clock divider 413b. The divisor in the divider 413b for the slower clock is a multiple of the divisor for the faster clock. This is easily achieved by deploying multiple dividers in a cascade. However, it is possible to deploy the dividers in different configurations, provided that the relationship between the divisors is met as described. This is required to ensure the edges are aligned, thus ensuring that the desired thresholds are reached. The electronic circuit 430 is similar to the electronic circuit 330. The number of added clock signals will determine the thresholds used in the sub circuits 430(i). In figure 4, each sub circuit has a signal conditioning circuit 331 coupled to a low threshold detector 432, a middle threshold detector 433 and a high threshold detector 434. In operation, the detectors are triggered when their relative threshold is met, discriminating between the various source clock frequencies.

Figure 4B is a plot showing a fast clock signal 450, a medium clock signal 462, a slow clock signal 464, and a 4-level clock signal 470 obtained from the combination of the first three signals.

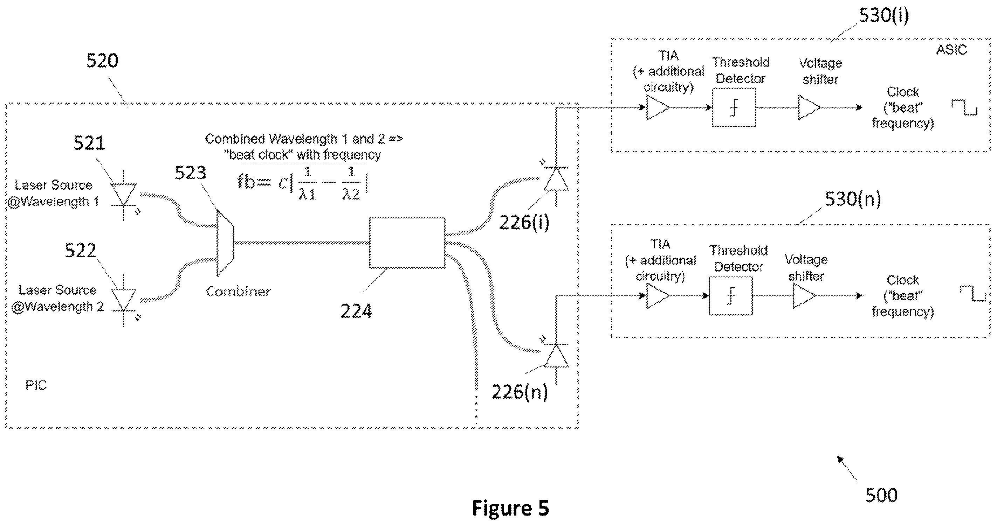

Figure 5 shows another circuit for distributing a plurality of clock signals. The circuit 500 is similar to the circuit 200 of figure 2. The same reference numerals have been used to represent corresponding components and their description will not be repeated for the sake of brevity. For clarity, the components of the optical arrangement 224 of the distribution circuit 220 are not shown. The optical arrangement 224 may be implemented as described in figure 2, or alternatively as a simplified version made only of the splitter (225a).

In this example the primary modulated optical signal is generated using two laser sources 521 and 522 coupled to a combiner 523. For instance the combiner 523 may be a y-splitter, a multimode interference (MMI) coupler or a directional coupler. Each laser is coupled to an input of the combiner 523 via a channel, such as a waveguide. The first and second lasers are adapted to operate at different wavelengths $\lambda 1$ and $\lambda 2$. For instance, the first and second lasers may be two slightly detuned lasers. The wavelengths are selected to generate the desired clock frequency. The output of the combiner 523 is coupled to the input of the optical arrangement 224 (splitter 225a not shown) via a single channel.

The electronic circuit 530 includes a plurality N of sub circuits 530(i)-530(n), associated with the photodetectors 226(i)-226(n). Each sub circuit 330(i) has a signal conditioning circuit coupled to a threshold detector. A voltage shifter is provided to bring the clock signal to an appropriate level for further use or processing.

In operation the lasers 521 and 522 generate a first and a second optical signal at the first and second wavelengths, respectively. The combiner 523 receives the first and second optical signals and combine the two optical signals to generate the primary modulated optical signal. Interference between the first and second signals generates beating. The primary modulated optical signal has a so-called beat frequency fb defined as

$$fb = c \left| \frac{1}{\lambda 1} - \frac{1}{\lambda 2} \right|$$ , in which c is the speed of light.

The primary modulated optical signal is then distributed via the optical arrangement 224 and the transducers 226(i)-226(n) as described above with reference to figure 2. Each transducer 226(i) is coupled to a sub circuits 530(i).

The circuit of figure 2 may also be modified to distribute multiple un-related clocks.

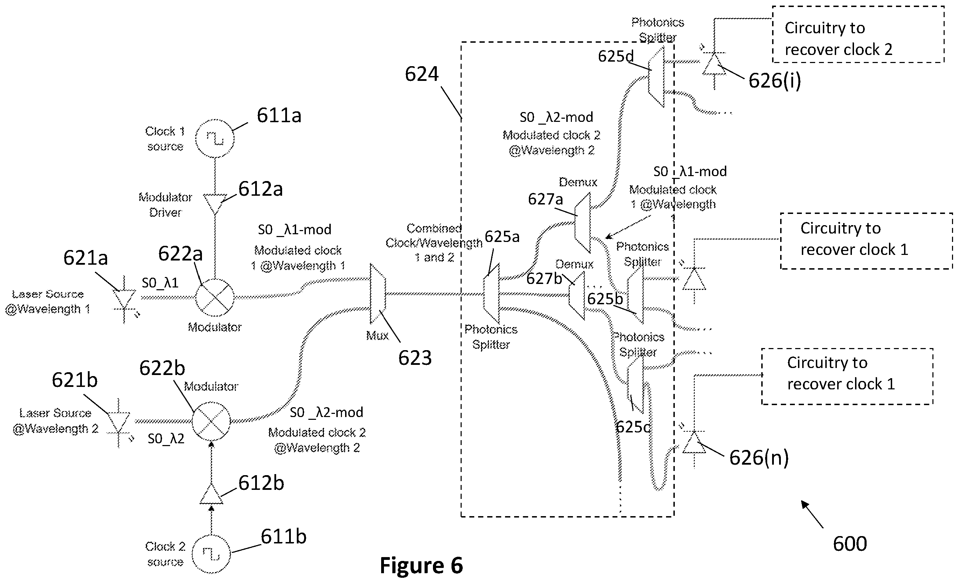

Figure 6 shows a circuit for distributing several un-related clock signals. The circuit 600 may be described as an extension of the circuit 200 of figure 2. The system 600 includes a first modulator 622a for generating a first primary modulated optical signal S0_$\lambda 1$-mod, and a second modulator 622b for generating a second modulated optical signal S0_$\lambda 2$-mod. The first

modulator 622a is coupled to a first light source 621a for generating an optical signal at a first wavelength $\lambda 1$, and the second modulator 622b is coupled to a second light source 621b for generating an optical signal at a second wavelength $\lambda 2$.

The light sources 621a and 621b may be two laser sources. Alternatively a single broadband source may be used followed by a wavelength demultiplexer for selecting two specific wavelengths or ranges of wavelengths to be received by the multiplexer 623. Examples of broadband sources may include an amplified spontaneous emission (ASE) source or a superluminescent light-emitting diode (SLED).

A first clock source 611a, and a second clock source 611b are provided to generate the primary clock signals Clock-1 and Clock-2, respectively. These clock signals are generated in the electronics domain.

The clock source 611a is coupled to the driver 612a for converting the primary clock signal Clock-1 to the required drive signal for driving the modulator 622a. Similarly, the clock source 611b is coupled to the driver 612b for converting the other primary clock signal Clock-2 to the required drive signal for driving the modulator 622b.

The modulator 622a is adapted to modulate an optical signal S0_$\lambda 1$ from the light source 621a using the drive signal derived from the primary clock signal Clock-1 to obtain the first primary modulated signal S0_$\lambda 1$-mod. Similarly, the modulator 622b is adapted to modulate an optical signal S0_$\lambda 2$ from the light source 621b using the drive signal derived from the primary clock signal Clock-2, to obtain the second primary modulated signal S0_$\lambda 2$-mod. Each optical signal S0_$\lambda 1$ and S0_$\lambda 2$ is modulated with a different clock waveform, the waveform of clock 1 or clock 2, respectively.

A wavelength multiplexer 623 is provided to combine the first primary modulated signal and the second primary modulated signal. A wavelength multiplexer may be used to combine two different wavelengths that are independent of each other and do not interact. The wavelength multiplexer 623 has a first input coupled to the output of modulator 622a and a second input coupled to the output of the modulator 622b via a pair of channels. The output of the wavelength multiplexer 623 is coupled to the input of the optical arrangement 624 via a single channel. Consequently, the wavelengths $\lambda 1$ and $\lambda 2$ are multiplexed on a same network. The wavelength multiplexer 623 could be replaced by a combiner, however using a wavelengths multiplexer permits to keep the full signal amplitude while a combiner would lose half of the signal.

The optical arrangement 624 is similar to the optical arrangement 224 described above with reference to figure 2, however in this case several wavelength demultiplexers are provided to recover the first primary modulated signal S0_$\lambda 1$-mod or the second primary modulated signal S0_ $\lambda 2$-mod. In figure 6, the splitter 625a is coupled to the splitters 625b and 625d via the wavelength demultiplexer 627a so as to provide the first primary modulated signal S0_ λ1-mod to the splitter 625b, and the second primary modulated signal S0_λ2-mod to the splitter 625d. The splitter 625a is also coupled to the splitters 625c via the wavelength demultiplexer 627b so as to provide the first primary modulated signal S0_λ1-mod to the splitter 625c.

A plurality of transducers 626(i)-626(n) implemented as photodetectors are provided to convert each secondary modulated signal in the optical domain into a corresponding secondary clock signal in the electronic domain. Each photodetector is coupled to a corresponding recovery circuit for recovering the clock waveforms (either clock 1 or clock 2) in the electronics domain. It will be appreciated that not all endpoints require the full set of recovery circuitry (photodetector, transimpedance amplifier (TIA), etc.) for all the wavelengths. Different endpoints may be designed to recover only some of the clocks and not all of them.

The circuit of figure 6 may therefore be used to distribute multiple un-related clocks on a same photonics network for deployment in a photonics or electronics domain. Photonics waveguides allow multiple independent wavelengths to be carried within the same distribution network. This allows multiple clocks (one per wavelength) to be distributed across the photonics network and then recovered selectively by the electronic circuitry, thus obtaining a multi-clock distribution within the same photonics network.

The circuit of figure 6 illustrated for two wavelengths could be extended to a greater number of wavelengths. A number N of different wavelengths could be provided for N different clock signals, in which N is equal or greater than 2. In this case N modulators coupled to N light sources would be provided, and the wavelength multiplexer would have N inputs for receiving the outputs of the N modulators.

A skilled person will therefore appreciate that variations of the disclosed arrangements are possible without departing from the disclosure. Accordingly, the above description of the specific embodiments is made by way of example only and not for the purposes of limitation. It will be clear to the skilled person that minor modifications may be made without significant changes to the operation described.

**Claims**

1.    An optical circuit (220, 520) for distributing one or more clock signals, the optical circuit comprising

an optical arrangement (224, 624) adapted to receive a primary modulated optical signal and split the primary modulated optical signal into a plurality of secondary modulated optical signals; a plurality of transducers (226) adapted to convert each secondary modulated optical signal into a corresponding secondary clock signal;

a first input port for receiving a first drive signal derived from a primary clock signal; and a modulator (222, 523, 622a) adapted to receive a first optical signal from a first light source (221, 521, 621a), wherein the modulator (222, 523, 622a) is adapted to modulate the first optical signal using the first drive signal to obtain the primary modulated optical signal.

2.    The optical circuit as claimed in claim 1, wherein the optical arrangement (224) comprises a primary splitter (225a) having an input for receiving the primary modulated optical signal and a plurality of outputs, each output being coupled to a corresponding primary channel for transmitting a corresponding secondary modulated optical signal.

3.    The optical circuit as claimed in claim 2, wherein the optical arrangement (224) comprises a plurality of splitting stages comprising at least a first stage and a second stage.

4.    The optical circuit as claimed in claim 3, wherein the first stage is configured to split the primary modulated optical signal into a first generation of secondary modulated signals and wherein the second stage is configured to split the first generation of secondary modulated signals into a second generation of secondary modulated signals; optionally wherein the first stage comprises the primary splitter (225a) and wherein the second stage comprises a set of secondary splitters (225b, 225c), each secondary splitter having an input coupled to a primary channel of the primary splitter and a plurality of outputs each output being coupled to a secondary channel for transmitting a corresponding secondary modulated signal from the second generation.

5.    The optical circuit as claimed in any of the claims 2 to 4, wherein a total length between the primary splitter (225a) and individual output ports is designed to be the same for the different paths.

6.    The optical circuit as claimed in claim 1, comprising the first light source (221) configured to generate the first optical signal; and/or wherein the optical circuit is an integrated optical circuit.

7.    The optical circuit (520) as claimed in claim 1, comprising

a first optical source (521) adapted to generate a first optical signal having a first wavelength; a second optical source (522) adapted to generate a second optical signal having a second wavelength; and a combiner (523) adapted to receive the first optical signal and the second optical signal to generate the primary modulated optical signal.

8. The optical circuit as claimed in claim 1, comprising a second input port for receiving a second drive signal and a second modulator (622b) adapted to modulate a second optical signal using the second drive signal to obtain another primary modulated optical signal, wherein the second drive signal is derived from another primary clock signal; wherein the first optical signal has a first wavelength and the second optical signal has a second wavelength.

9. The optical circuit as claimed in claim 8, wherein the optical arrangement comprises a wavelength multiplexer or combiner (623) to combine the primary modulated optical signals; optionally wherein the optical arrangement (624) comprises at least one wavelength demultiplexer (627) to separate the primary modulated optical signals.

10. A system comprising an optical circuit as claimed in any of the preceding claims coupled to a clock source (211, 611a).

11. The system as claimed in claim 10, wherein the primary clock signal encodes a first periodic signal at a first frequency and a second periodic signal at a second frequency.

12. The system as claimed in claim 11, comprising a frequency divider (313, 413a) coupled to an adder (314, 414a), the frequency divider being adapted to receive a first clock signal from the clock source (211) at the first frequency and to generate a second clock signal at the second frequency; wherein the adder (314, 414a) is adapted to add the first clock signal with the second clock signal to generate the primary clock signal; optionally wherein the first clock signal and the second clock signal are aligned in phase.

13. The system as claimed in any of the claims 10 to 12, wherein the clock source (611a) is a first clock source for generating a first primary clock signal, and wherein the system comprises a second clock source (611b) for generating a second primary clock signal.

14. The system as claimed in any of the claims 10 to 13 further comprising at least one electronic circuit (230, 330, 430, 530) having a plurality of ports for receiving the plurality of secondary clock signals; optionally wherein the said at least one electronic circuit comprises a plurality of recovery circuits, each recovery circuit being coupled to a corresponding transducer of the optical circuit.

15. A method of distributing one or more clock signals, the method comprising

receiving a first drive signal at a first input port, wherein the first drive signal is derived from a primary clock signal;

receiving by a modulator (222, 523, 622a) a first optical signal from a first light source (221, 521, 621a);

modulating, with the modulator, the first optical signal using the first drive signal to obtain a primary modulated optical signal;

splitting the primary modulated optical signal into a plurality of secondary modulated optical signals; and

converting, with a plurality of transducers (226), each secondary modulated optical signal into a corresponding secondary clock signal.

## Patentansprüche

1. Optische Schaltung (220, 520) zum Verteilen von einem oder mehreren Taktsignalen, wobei die optische Schaltung Folgendes umfasst

eine optische Anordnung (224, 624), die dazu angepasst ist, ein primäres moduliertes optisches Signal zu empfangen und das primäre modulierte optische Signal in eine Vielzahl von sekundären modulierten optischen Signalen zu teilen;

eine Vielzahl von Wandlern (226), die dazu angepasst sind, jedes sekundäre modulierte optische Signal in ein entsprechendes sekundäres Taktsignal umzuwandeln;

einen ersten Eingangsanschluss zum Empfangen eines ersten Ansteuersignals, das von einem primären Taktsignal abgeleitet ist; und

einen Modulator (222, 523, 622a), der dazu angepasst ist, ein erstes optisches Signal von einer ersten Lichtquelle (221, 521, 621a) zu empfangen, wobei der Modulator (222, 523, 622a) dazu angepasst ist, das erste optische Signal unter Verwendung des ersten Ansteuersignals zu modulieren, um das primäre modulierte optische Signal zu erhalten.

2. Optische Schaltung nach Anspruch 1, wobei die optische Anordnung (224) einen primären Teiler (225a) umfasst, der einen Eingang zum Empfangen des primären modulierten optischen Signals und eine Vielzahl von Ausgängen aufweist, wobei jeder Ausgang an einen entsprechenden primären Kanal gekoppelt ist, um ein entsprechendes sekundäres moduliertes optisches Signal zu übertragen.

3. Optische Schaltung nach Anspruch 2, wobei die optische Anordnung (224) eine Vielzahl von Teilungsstufen umfasst, die mindestens eine erste Stufe und eine zweite Stufe umfassen.

**4.** Optische Schaltung nach Anspruch 3, wobei die erste Stufe dazu konfiguriert ist, das primäre modulierte optische Signal in eine erste Generation von sekundären modulierten Signalen zu teilen, und wobei die zweite Stufe dazu konfiguriert ist, die erste Generation von sekundären modulierten Signalen in eine zweite Generation von sekundären modulierten Signalen zu teilen; optional

wobei die erste Stufe den primären Teiler (225a) umfasst und wobei die zweite Stufe einen Satz sekundärer Teiler (225b, 225c) umfasst, wobei jeder sekundäre Teiler einen Eingang, der an einen primären Kanal des primären Teilers gekoppelt ist, und eine Vielzahl von Ausgängen aufweist, wobei jeder Ausgang an einen sekundären Kanal gekoppelt ist, um ein entsprechendes sekundäres moduliertes Signal von der zweiten Generation zu übertragen.

**5.** Optische Schaltung nach einem der Ansprüche 2 bis 4, wobei eine Gesamtlänge zwischen dem primären Teiler (225a) und einzelnen Ausgangsanschlüssen so ausgelegt ist, dass sie für die verschiedenen Pfade gleich ist.

**6.** Optische Schaltung nach Anspruch 1, umfassend die erste Lichtquelle (221), die dazu konfiguriert ist, das erste optischen Signal zu erzeugen; und/oder wobei die optische Schaltung eine integrierte optische Schaltung ist.

**7.** Optische Schaltung (520) nach Anspruch 1, umfassend

eine erste optische Quelle (521), die dazu angepasst ist, ein erstes optisches Signal mit einer ersten Wellenlänge zu erzeugen;
eine zweite optische Quelle (522), die dazu angepasst ist, um ein zweites optisches Signal mit einer zweiten Wellenlänge zu erzeugen; und
einen Kombinierer (523), der dazu angepasst ist, das erste optische Signal und das zweite optische Signal zu empfangen, um das primäre modulierte optische Signal zu erzeugen.

**8.** Optische Schaltung nach Anspruch 1, umfassend einen zweiten Eingangsanschluss zum Empfangen eines zweiten Ansteuersignals und einen zweiten Modulator (622b), der dazu angepasst ist, ein zweites optisches Signal unter Verwendung des zweiten Ansteuersignals zu modulieren, um ein anderes primäres moduliertes optisches Signal zu erhalten, wobei das zweite Ansteuersignal von einem anderen primären Taktsignal abgeleitet ist; wobei das erste optische Signal eine erste Wellenlänge aufweist und das zweite optische Signal eine zweite Wellenlänge aufweist.

**9.** Optische Schaltung nach Anspruch 8, wobei die optische Anordnung einen Wellenlängenmultiplexer oder -kombinierer (623) umfasst, um die primären modulierten optischen Signale zu kombinieren; optional wobei die optische Anordnung (624) mindestens einen Wellenlängendemultiplexer (627) umfasst, um die primären modulierten optischen Signale zu trennen.

**10.** System, umfassend eine optische Schaltung nach einem der vorhergehenden Ansprüche, die an eine Taktquelle (211, 611a) gekoppelt ist.

**11.** System nach Anspruch 10, wobei das primäre Taktsignal ein erstes periodisches Signal mit einer ersten Frequenz und ein zweites periodisches Signal mit einer zweiten Frequenz codiert.

**12.** System nach Anspruch 11, umfassend einen Frequenzteiler (313, 413a), der an einen Addierer (314, 414a) gekoppelt ist, wobei der Frequenzteiler dazu angepasst ist, ein erstes Taktsignal von der Taktquelle (211) mit der ersten Frequenz zu empfangen und ein zweites Taktsignal mit der zweiten Frequenz zu erzeugen; wobei der Addierer (314, 414a) dazu angepasst ist, das erste Taktsignal mit dem zweiten Taktsignal zu addieren, um das primäre Taktsignal zu erzeugen; optional wobei das erste Taktsignal und das zweite Taktsignal in Phase ausgerichtet sind.

**13.** System nach einem der Ansprüche 10 bis 12, wobei die Taktquelle (611a) eine erste Taktquelle zum Erzeugen eines ersten primären Taktsignals ist und wobei das System eine zweite Taktquelle (611b) zum Erzeugen eines zweiten primären Taktsignals umfasst.

**14.** System nach einem der Ansprüche 10 bis 13, ferner umfassend mindestens eine elektronische Schaltung (230, 330, 430, 530), die eine Vielzahl von Anschlüssen zum Empfangen der Vielzahl von sekundären Taktsignalen aufweist; optional wobei die mindestens eine elektronische Schaltung eine Vielzahl von Wiederherstellungsschaltungen umfasst, wobei jede Wiederherstellungsschaltung an einen entsprechenden Wandler der optischen Schaltung gekoppelt ist.

**15.** Verfahren zum Verteilen von einem oder mehreren Taktsignalen, wobei das Verfahren Folgendes umfasst,

Empfangen eines ersten Ansteuersignals an einem ersten Eingangsanschluss, wobei das erste Ansteuersignal von einem primären Taktsignal abgeleitet ist;
Empfangen eines ersten optischen Signals von einer ersten Lichtquelle (221, 521, 621a) durch einen Modulator (222, 523, 622a);

Modulieren, mit dem Modulator, des ersten optischen Signals unter Verwendung des ersten Ansteuersignals, um ein primäres moduliertes optisches Signal zu erhalten;

Teilen des primären modulierten optischen Signals in eine Vielzahl von sekundären modulierten optischen Signalen; und

Umwandeln, mit einer Vielzahl von Wandlern (226), jedes sekundären modulierten optischen Signals in ein entsprechendes sekundäres Taktsignal.

## Revendications

1. Circuit optique (220, 520) pour distribuer un ou plusieurs signaux d'horloge, le circuit optique comprenant

   un agencement optique (224, 624) adapté pour recevoir un signal optique modulé primaire et séparer le signal optique modulé primaire en une pluralité de signaux optiques modulés secondaires ;

   une pluralité de transducteurs (226) adaptés pour convertir chaque signal optique modulé secondaire en un signal d'horloge secondaire correspondant ;

   un premier orifice d'entrée pour recevoir un premier signal d'entraînement dérivé d'un signal d'horloge primaire ; et

   un modulateur (222, 523, 622a) adapté pour recevoir un premier signal optique à partir d'une première source de lumière (221, 521, 621a), dans lequel le modulateur (222, 523, 622a) est adapté pour moduler le premier signal optique à l'aide du premier signal d'entraînement pour obtenir le signal optique modulé primaire.

2. Circuit optique selon la revendication 1, dans lequel l'agencement optique (224) comprend un séparateur primaire (225a) présentant une entrée pour recevoir le signal optique modulé primaire et une pluralité de sorties, chaque sortie étant couplée à un canal primaire correspondant pour transmettre un signal optique modulé secondaire correspondant.

3. Circuit optique selon la revendication 2, dans lequel l'agencement optique (224) comprend une pluralité d'étages de séparation comprenant au moins un premier étage et un second étage.

4. Circuit optique selon la revendication 3, dans lequel le premier étage est conçu pour séparer le signal optique modulé primaire en une première génération de signaux modulés secondaires et dans lequel le second étage est conçu pour séparer la première génération de signaux modulés secondaires en une seconde génération de signaux modulés secondaires ; éventuellement dans lequel le premier étage comprend le séparateur primaire (225a) et dans lequel le second étage comprend un ensemble de séparateurs secondaires (225b, 225c), chaque séparateur secondaire présentant une entrée couplée à un canal primaire du séparateur primaire et une pluralité de sorties, chaque sortie étant couplée à un canal secondaire pour transmettre un signal modulé secondaire correspondant à partir de la seconde génération.

5. Circuit optique selon l'une quelconque des revendications 2 à 4, dans lequel une longueur totale entre le séparateur primaire (225a) et des orifices de sortie individuels est conçue pour être la même pour les différents trajets.

6. Circuit optique selon la revendication 1, comprenant la première source de lumière (221) conçue pour générer le premier signal optique ; et/ou dans lequel le circuit optique est un circuit optique intégré.

7. Circuit optique (520) selon la revendication 1, comprenant

   une première source optique (521) adaptée pour générer un premier signal optique présentant une première longueur d'onde ;

   une seconde source optique (522) adaptée pour générer un second signal optique présentant une seconde longueur d'onde ; et

   un combineur (523) adapté pour recevoir le premier signal optique et le second signal optique pour générer le signal optique modulé primaire.

8. Circuit optique selon la revendication 1, comprenant un second orifice d'entrée pour recevoir un second signal d'entraînement et un second modulateur (622b) adapté pour moduler un second signal optique à l'aide du second signal d'entraînement pour obtenir un autre signal optique modulé primaire, dans lequel le second signal d'entraînement est dérivé d'un autre signal d'horloge primaire ; dans lequel le premier signal optique présente une première longueur d'onde et le second signal optique présente une seconde longueur d'onde.

9. Circuit optique selon la revendication 8, dans lequel l'agencement optique comprend un multiplexeur ou un combineur (623) de longueur d'onde pour combiner les signaux optiques modulés primaires ; éventuellement dans lequel l'agencement optique (624) comprend au moins un démultiplexeur de longueur d'onde (627) pour séparer les signaux optiques modulés primaires.

**10.** Système comprenant un circuit optique selon l'une quelconque des revendications précédentes couplé à une source d'horloge (211, 611a).

**11.** Système selon la revendication 10, dans lequel le signal d'horloge primaire code un premier signal périodique à une première fréquence et un second signal périodique à une seconde fréquence.

**12.** Système selon la revendication 11, comprenant un diviseur de fréquence (313, 413a) couplé à un additionneur (314, 414a), le diviseur de fréquence étant adapté pour recevoir un premier signal d'horloge à partir de la source d'horloge (211) à la première fréquence et pour générer un second signal d'horloge à la seconde fréquence ; dans lequel l'additionneur (314, 414a) est adapté pour ajouter le premier signal d'horloge au second signal d'horloge pour générer le signal d'horloge primaire ; éventuellement dans lequel le premier signal d'horloge et le second signal d'horloge sont alignés en phase.

**13.** Système selon l'une quelconque des revendications 10 à 12, dans lequel la source d'horloge (611a) est une première source d'horloge pour générer un premier signal d'horloge primaire, et dans lequel le système comprend une seconde source d'horloge (611b) pour générer un second signal d'horloge primaire.

**14.** Système selon l'une quelconque des revendications 10 à 13, comprenant en outre au moins un circuit électronique (230, 330, 430, 530) présentant une pluralité d'orifices pour recevoir la pluralité de signaux d'horloge secondaires ; éventuellement dans lequel ledit au moins un circuit électronique comprend une pluralité de circuits de récupération, chaque circuit de récupération étant couplé à un transducteur correspondant du circuit optique.

**15.** Procédé de distribution d'un ou de plusieurs signaux d'horloge, le procédé comprenant la réception d'un premier signal d'entraînement au niveau d'un premier orifice d'entrée, dans lequel le premier signal d'entraînement est dérivé d'un signal d'horloge primaire ;

la réception, par un modulateur (222, 523, 622a), d'un premier signal optique à partir d'une première source de lumière (221, 521, 621a) ; la modulation, avec le modulateur, du premier signal optique à l'aide du premier signal d'entraînement pour obtenir un signal optique modulé primaire ; la séparation du signal optique modulé primaire en une pluralité de signaux optiques modulés secondaires ; et la conversion, avec une pluralité de transducteurs (226), de chaque signal optique modulé secondaire en un signal d'horloge secondaire correspondant.

```
                                                                          110
┌──────────────────────────────────────────────────────────────┐
│           receiving a primary modulated optical signal          │
└──────────────────────────────────────────────────────────────┘
                                 │
                                 ▼
                                                                          120
┌──────────────────────────────────────────────────────────────┐
│  splitting the primary modulated optical signal into a plurality of secondary │
│                    modulated optical signals;                    │
└──────────────────────────────────────────────────────────────┘
                                 │
                                 ▼
                                                                          130
┌──────────────────────────────────────────────────────────────┐
│  converting each secondary modulated optical signal into a corresponding │
│                      secondary clock signal.                     │
└──────────────────────────────────────────────────────────────┘
```

**Figure 1**

**Figure 2A**

210

Clock source

211

Clock-1

220

Modulator Driver

212

PIC

Laser Source

221

Modulator

222

Splitter

225a

225b  Splitter

Splitter

225c

224

226(i)

Clock-2(i)

226(n)

230

Recovery Circuitry

231(i)

232(i)

231(n)

232(n)

Clock-2(N)

Recovery Circuitry

ASIC

200

EP 4 689 830 B1

14

**Figure 2B**

EP 4 689 830 B1

**Figure 3A**

EP 4 689 830 B1

**Figure 3B**

EP 4 689 830 B1

**Figure 4A**

**Figure 4B**

$$f_b = c \left| \frac{1}{\lambda 1} - \frac{1}{\lambda 2} \right|$$

Combined Wavelength 1 and 2 => "beat clock" with frequency

**Figure 5**

**Figure 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5537498 A